# EUROPÄISCHE PATENTSCHRIFT

(11) **EP 1 337 420 B1**
(45) Veröffentlichungstag und Bekanntmachung des Hinweises auf die Patenterteilung: **10.08.2005**
(21) Anmeldenummer: 01996484.0
(22) Anmeldetag: 16.11.2001
(51) Int. Cl.: B60S 1/38, B60S 1/40

(54) **WISCHHEBEL MIT EINEM ANGETRIEBENEN WISCHERARM UND EINEM AN DIESEM ANGELENKTEN WISCHBLATT ZUM REINIGEN VON SCHEIBEN INSBESONDERE VON KRAFTFAHRZEUGEN**
WINDSCREEN WIPER WITH A DRIVEN WIPER ARM AND WIPER BLADE JOINTED THERETO FOR CLEANING SCREENS IN PARTICULAR ON MOTOR VEHICLES
LEVIER D'ESSUIE-GLACE COMPORTANT UN BRAS D'ESSUIE-GLACE ENTRAINE ET UNE RACLETTE D'ESSUIE-GLACE ARTICULEE SUR LEDIT BRAS POUR LE NETTOYAGE DE VITRES, EN PARTICULIER DE VEHICULES AUTOMOBILES

(30) Priorität: 18.11.2000 DE 10057253
(43) Veröffentlichungstag der Anmeldung: 27.08.2003
(60) Teilanmeldung: 05102263.0
(73) Patentinhaber: ROBERT BOSCH GMBH, 70442 Stuttgart (DE)
(72) Erfinder: BREESCH, Frans, B-3840 Borloon (BE)
(86) Internationale Anmeldenummer: PCT/DE2001/004307
(87) Internationale Veröffentlichungsnummer: WO 2002/040329

(56) Entgegenhaltungen:
- DE-A- 3 222 864
- DE-A- 3 709 810
- DE-A- 19 734 843
- DE-A- 19 856 300

## Beschreibung

### Stand der Technik

Bei einem Wischhebel der im Oberbegriff des unabhängigen Anspruchs bezeichneten Art soll das Tragelement des Wischblatts über das gesamte vom Wischblatt bestrichene Wischfeld eine möglichst gleichmäßige Verteilung des vom Wischerarm ausgehenden Wischblatt-Anpressdrucks an der Scheibe gewährleisten. Durch eine entsprechende Krümmung des unbelasteten Tragelements - also wenn das Wischblatt nicht an der Scheibe anliegt - werden die Enden der in Betrieb des Wischblatts vollständig an der Scheibe angelegten Wischleiste durch das angespannte Tragelement zur Scheibe belastet, auch wenn sich die Krümmungsradien von spärisch gekrümmten Fahrzeugscheiben bei jeder Wischblattposition ändern. Die Krümmung des Wischblatts muß also etwas stärker sein als die im Wischfeld an der zu wischenden Scheibe gemessene stärkste Krümmung. Das Tragelement ersetzt somit die aufwendige, zur Verteilung des Anpreßdrucks erforderliche Tragbügelkonstruktion mit zwei in der Wischleiste angeordneten, der Querversteifung der gummielastischen Wischleiste dienenden Federschienen, wie sie bei herkömmlichen Wischblättern praktiziert wird (DE-PS 1247 16 1).

Bei einem bekannten Wischhebel mit einem Wischblatt, bei dem aus Gründen der Auflage-Druckverteilung das Tragelement im Wischblattmittelbereich weit über die Breite der Wischleiste hinausragt (DE-PS 1247161), kann die auf der dem Fahrtwind zugewandten Vorderseite unter dem Aufbau eines Überdrucks von diesem untergriffen werden. Andererseits baut sich auf der vom Fahrtwind abgewandten Rückseite wegen des erwähnten Wischblattaufbaus ein erheblicher Unterdruck auf. In Betrieb verändert das eine Pendelbewegung ausführende Wischblatt zwar seine Lage in Bezug auf den anströmenden Fahrtwind ständig, doch ist auch dann stets seine eine Längsseite diesem mehr oder weniger stark zugewandt und wird deshalb auch als Vorderseite bezeichnet, während seine andere Längsseite demzufolge auch als Rückseite angesehen wird. Im Zusammenwirken dieser beiden vorerwähnten Drucke, die beide dem Wischblatt-Anpressdruck entgegengerichtet sind, werden diese bei höheren Fahrgeschwindigkeiten zumindest so verringert, dass kein ordnungsgemäßes Wischergebnis mehr möglich ist. Um diesem ungünstigen Strömungsverhalten abzuhelfen, ist bei einem bekannten, gattungsgemäßen Wischhebel (DE 198 56299.3 Al) an der oberen Bandfläche des Tragelements eine Windabweisleiste mit einer der hauptsächlichen Strömungsrichtung zugewandten Anströmfläche angeordnet. Diese Windabweisleiste hat zwei Abschnitte oder Teilleisten, die sich jeweils von der Verbindungsvorrichtung aus zu den Enden des Tragelements beziehungsweise des Wischblatts erstrecken. Es ergibt sich somit eine Aussparung im Verlauf der Windabweisleiste für die Positionierung der Verbindungsvorrichtung. Diese optische Unterbrechung der Windabweisleiste wird insbesondere von den Herstellern von Fahrzeugen der gehobenen Klasse aus Gründen des Stylings beanstandet. Darüberhinaus trägt diese Unterbrechung der an der Windabweisleiste vorhandenen Anströmfläche durch die sich dabei ergebenden Kanten und Spalten auch zu einer unerwünschten Verstärkung von Fahrtwindgeräuschen bei.

Zwar ist es bei dem gattungsgemäßen Wischhebel bekannt, den Querschnitt eines im Längsmittelbereich des Wischblatts an dessen oberen Bandfläche sitzenden Halters für zwei zum Tragelement gehörende Federschienen an den Querschnitt der sich beidseitig des Halters erstreckenden Windabweisleistenabschnitte anzupassen, doch liegen auch dort die Mittel zum Anschliessen des Wischblatts am Wischerarm völlig frei, so dass auch dieser Wischerarm und Wischblatt umfassende Wischhebel mit den schon beschriebenen Nachteilen behaftet ist.

DE-A-19734843 offenbart den Oberbegriff des Anspruchs 1.

### Vorteile der Erfindung

Durch die Anordnung der Abdeckkappe im Anschlußbereich zwischen Wischerarm und Wischblatt kann durch eine entsprechende Ausformung der Kappe ein formschöner Übergang zwischen den beiden, der Verbindungsvorrichtung benachbarten Windabweisleisten-Abschnitte erreicht werden. Dabei ist es möglich, zumindest die Kappenabschnitte, welche die ihnen benachbarten Bereiche dieser Abschnitte auch überdecken können, an die Formgebung der Windabweisleiste anzupassen. Weiter werden dadurch Fahrtwindgeräusche erzeugende, einer laminaren Strömung des Fahrtwindes entgegenstehenden Problemzonen am Wischhebel vermieden. Schließlich schützen die Abdeckkappe die empfindliche Gelenkverbindung zwischen Wischerarm und Wischblatt gegen Umwelteinflüsse wie z.B. Strassenschmutz, Schnee, Eis, ect.

Eine besonders einfach Anpassung der Kappe an die Ausgestaltung des Wischblatts ist möglich, wenn die Kappe am Wischblatt gehalten, insbesondere mit dem Wischblatt verrastet ist.

Dies kann kostengünstig dadurch erreicht werden, dass die im Querschnitt U-förmige Abdeckkappe aus einem elastischen Kunststoff gefertigt und mit elastisch auslenkbaren Rastmitteln versehen ist, denen Gegenlastmittel des Wischblatts zugeordnet sind.

Wenn die Gegenrastmittel des Wischblatts an den äusseren Längskanten des bandartigen Tragelements ausgebildet sind, sind keine besonderen Maßnahmen zur Ausbildung der Gegenrastmittel erforderlich.

Um eine stabile, dem Druck des anströmenden Fahrtwinds gewachsene Rastverbindung zu erhalten, ist die Abdeckkappe mit zumindest einer mit der oberen Bandfläche des Tragelements zusammenwirkenden Abstützung versehen, wobei an die Kappe elastisch auslenkbare, das Tragelement untergreifende, als Rastmittel dienende Rastnasen angeformt sind.

Hinsichtlich der Flexibilität des Wischblatts beziehungsweise des Tragelements kann es besonders vorteilhaft sein, wenn im Bereich der Haltekrallen des als Verbindungsstück dienenden Kupplungsteils die Kappe an ihrer elastisch auslenkbaren Innenwand mit die Haltekrallen übergreifenden klammerartigen Sicherungskrallen versehen ist.

Eine einfache Montage des Wischhebels ergibt sich, wenn die Kappe mit einer Durchtrittsöffnung für den Wischerarm versehen ist.

Weil im Laufe der Zeit das Material der Windabweisleiste altert - was mit einer gewissen Schrumpfung verbunden ist - können sich zwischen der Kappe und den diesen zugewandten Stirnflächen der Windabweisleisten-Teilabschnitte Luftspalte ergeben, die zu den schon geschilderten Nachteilen hinsichtlich der Optik und der Geräuschverstärkung führen. Dies kann gemäß einer Weiterbildung der Erfindung dadurch vermieden werden, dass Verlängerungen an der Kappe die ihnen zugewandten Endabschnitte der Windabweisleisten-Teilabschnitte überdecken.

Aus optischen Gründen und aus Gründen der unerwünschten Fahrtwind-Geräuscherzeugung kann es von Vorteil sein, wenn die Abdeckkappe an ihrer einen Längswand in Fortführung der Anströmkehlung an der Windabweisleiste mit einer Hohlkehle versehen ist.

Für bestimmte Anwendungsfälle kann es günstig sein, wenn die Abdeckkappe am Wischerarm gehalten ist.

Durch eine schwenkbare Lagerung der Abdeckkappe am Wischerarm bleibt diese stets mit dem Wischerarm verbunden und präsent. Sie kann zwischen zwei Stellungen - Betriebsstellung und Lösestellung - bewegt werden.

Zur Sicherung der Abdeckkappe in ihrer Betriebsposition ist der Wischerarm an einander gegenüberliegenden Längswänden mit miteinander fluchtenden Lageraufnahmen versehen, denen an dem den Längswänden benachbarten Kappenwänden angeordnete Gelenkzapfen zugeordnet sind.

Wenn die Abdeckkappe aus einem elastischen Kunststoff hergestellt ist und die Gelenkzapfen an elastisch auslenkbaren Wandbereichen der Abdeckkappe angeordnet sind, ist eine einfache, zweckmäßige Schwenklagerung für die Kappe erreicht.

Zur Sicherung der Abdeckkappe in ihrer Betriebsposition sind an elastisch auslenkbaren Wandbereichen der Abdeckkappe Rastmittel angeformt, die in Betriebsstellung der Kappe mit am Wischerarm vorhandenen Gegenrastmitteln zusammenwirken.

Bei einem Wischhebel, bei dem die Verbindung zwischen Wischerarm und Wischblatt durch eine Schiebebewegung erfolgt, wobei eine Anschlagschulter des Wischerarms mit einer Gegenschulter des Wischblatts zusammenwirkend die Betriebsposition fixiert, wird eine unbeabsichtigte Lösebewegung des Wischblatts vom Wischerarm sicher vermieden, wenn an der Abdeckkappe eine dem Wischblatt zugewandte Sicherungsnase angeordnet ist, welche in dieser Betriebsposition und in Betriebsstellung der Abdeckkappe passend in eine am Wischblatt vorhandene Sicherungsausnehmung greift.

Weitere vorteilhafte Weiterbildungen und Ausgestaltungen der Erfindung sind in der nachfolgenden Beschreibung vor in den dazugehörigen Zeichnung dargestellten Ausführungsbeispielen angegeben.

### Zeichnung

In der Zeichnung zeigen:
Figur 1 eine Seitenansicht eines Wischhebels, dessen Wischblatt mit einer Windabweisleiste versehen ist, unmaßstäblich gezeichnet,
Figur 2 eine vergrösserte Darstellung einer in Figur 1 mit II bezeichneten Einzelheit, mit der Querschnittsfläche der Windabweisleiste,
Figur 3 eine zum Wischhebel gehörende Abdeckkappe perspektivisch dargestellt,
Figur 4 einen Längsschnitt durch die Abdeckkappe entlang der Linie IV-IV in Figur 3, vergrößert gezeichnet,
Figur 5 einen Querschnitt entlang der Linie V-V durch die Anordnung gemäß Figur 2,
Figur 6 einen Querschnitt entlang der Linie VI-VI durch eine andere Ausführungsform der Anordnung gemäß Figur 5,
Figur 7 eine Vormontagestellung von Wischblatt und Abdeckkappe zueinander,
Figur 8 den Anschlußbereich eines anders ausgeführten Wischhebels, teilweise geschnitten,
Figur 9 einen Längsschnitt durch die zur Ausführung gemäß Figur 8 gehörenden Abdeckkappe, verkleinert gezeichnet, Figur 10 eine Ansicht der Abdeckkappe gemäß Figur 9 in Richtung des Pfeiles X gesehen,
Figur 11 eine isometrische Darstellung von unten des anschlußseitigen Endes des zur Ausführungsform gemäß Figur 8 gehörenden Wischerarms
und Figur 12 eine Vormontagestellung vom Wischblatt und Wischerarm, zueinander im Schnitt gezeichnet, wobei ein Teilbereich der Abdeckkappe strichpunktiert in Betriebsposition eingezeichnet ist.

### Beschreibung der Ausführungsbeispiele

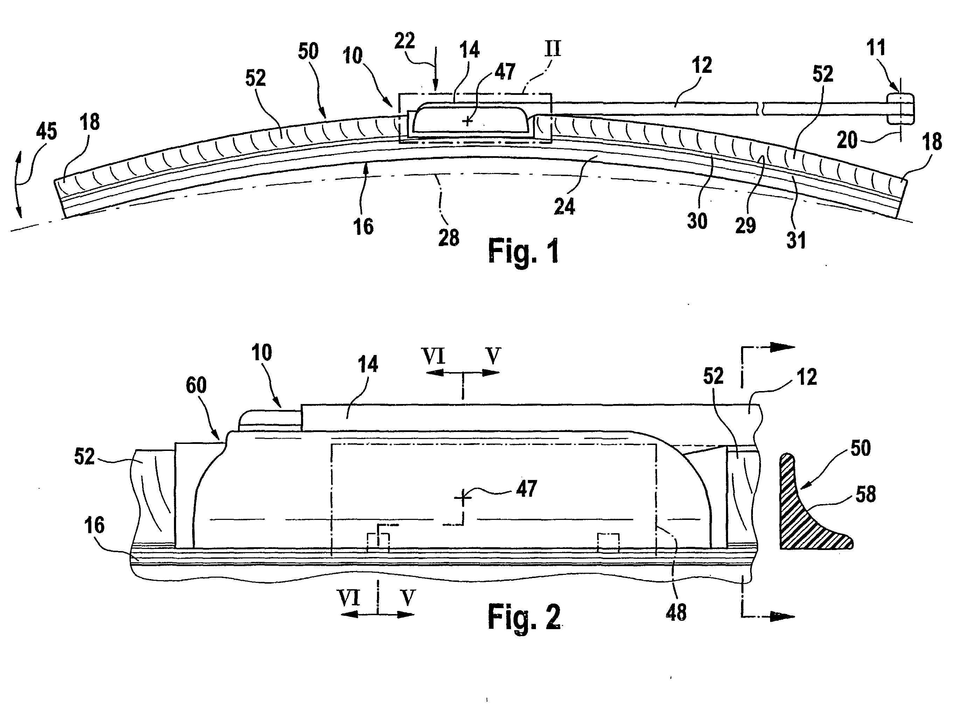

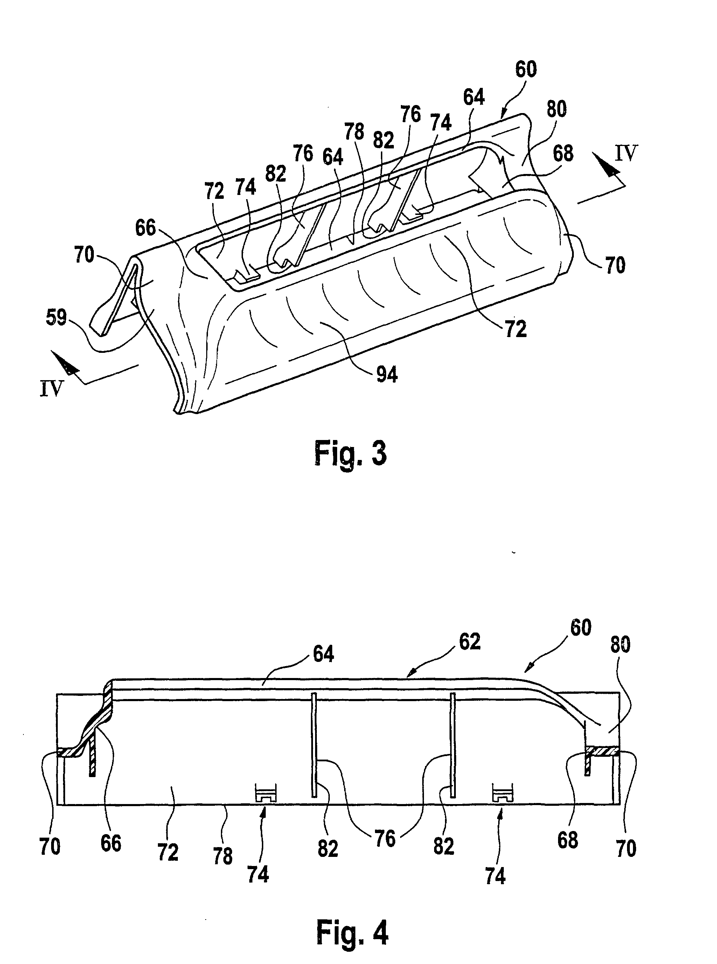

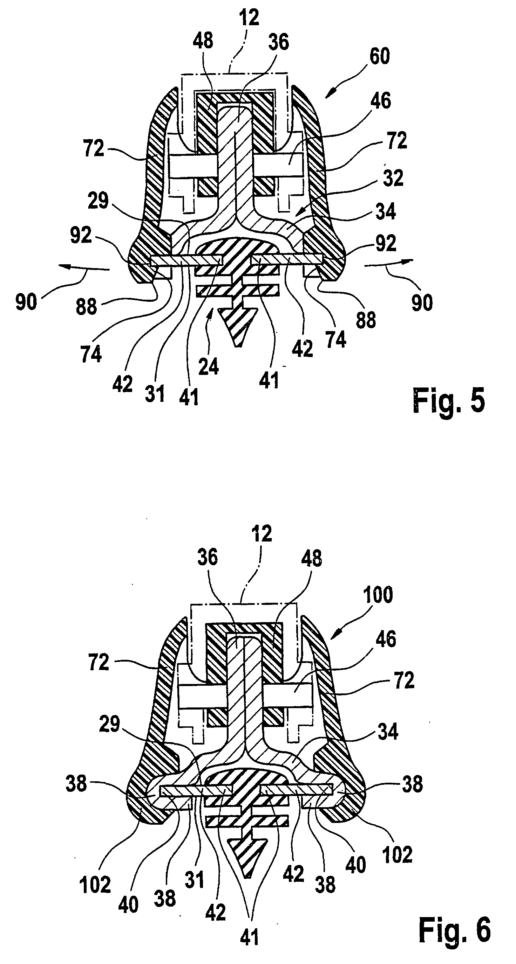

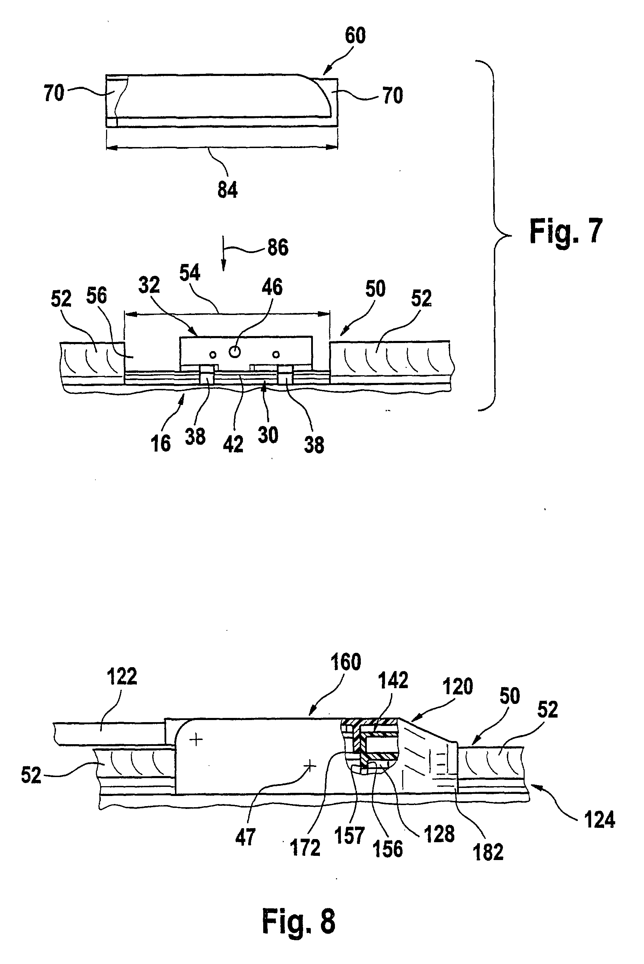

Bei einer ersten Ausführungsform eines erfindungsgemäßen Wischhebel 10 (Figur 1) gehört zu diesem ein einendig an einem nicht dargestellten Kraftfahrzeug geführter, angetriebener Wischerarm 12. Das angetriebene Ende des Wischerarms ist in Figur 1 mit der Bezugszahl 11 versehen worden. An dem anderen, freien Ende 14 des Wischerarms ist ein langgestrecktes, zum Wischhebel 10 gehörendes Wischblatt 16 angelenkt. Der Wischerarm 12 ist an seinem Antriebsende 11 so gelagert, dass er während des Wischbetriebs in einer auf der Zeichnungsebene stehenden Ebene um eine Pendelachse 20 zwischen Umkehrlagen pendelbar ist. Dabei wird das Wischblatt 16 quer zu seiner Längserstreckung über die zu wischende Scheibe bewegt, wobei es mit einer gummieelastischen Wischleiste 24 an der Oberfläche 28 der zu wischenden Scheibe anliegt. Die Wischleiste 24 ist längsachsenparallel mit einem bandartig langgestreckten, federelastischen Tragelement 30 verbunden, an dessen von der Scheibe abgewandten oberen Bandfläche 29 ein Kupplungsteil 32 sitzt (Figuren 5 und 7), über welches das Wischblatt 16 mit dem Wischerarm 12 zur Bildung des Wischhebels gelenkig verbunden ist. Die Wischleiste 24 ist somit an der unteren, der Scheibe zugewandten Bandfläche 31 des Tragelements 30 angeordnet. Das abschnittsweise im Querschnitt T-förmige Kupplungsteil 32 ist mit seinem T-Kopf 34 dem Tragelement 30 zugewandt und umgreift mit am T-Kopf angeordneten Krallen 38 die voneinander abgewandten äusseren Längsstreifen 40 des Tragelements 30. Das Kupplungsteil 32 wird an diesen Krallen mit dem Tragelement 30 verbunden, beispielsweise verschweißt und/oder zum Zusammenpressen der Krallen an diesem festgelegt. Das Tragelement 30 umfasst beim Ausführungsbeispiel zwei Federschienen 42, welche in einer gemeinsamen Ebene liegend sich parallel zueinander erstrecken. Die einander zugewandten inneren Längsstreifen 41 der Federschienen 42 liegen in randoffenen Längsnuten der Wischleiste 24. Der T-Fuß 36 des Kupplungsteils 32 erstreckt sich vom Tragelement 30 weg und ist von einem Gelenkbolzen 46 durchdrungen, von dem in den Figuren 5 und 6 dessen beiden aus dem T-Fuß ragenden Enden sichtbar sind. An diesem Gelenkbolzen beziehungsweise an dessen freiliegenden Enden greift der Wischerarm 12 (in den Figuren 5 und 6 strichpunktiert gezeichnet) mit entsprechend ausgebildeten Lagerausnehmungen an. Zwischen dem T-Fuß 36 und dem Wischerarm 12 befinden sich noch ein vorzugsweise aus einem Kunststoff hergestellter Adapter 48, über welchen eine betriebssichere Verbindung zwischen Wischerarm 12 und Wischblatt 16 zur Bildung des Wischhebels 10 sichergestellt ist. Aus den Figuren 5 und 6 ist ersichtlich, dass der Gelenkbolzen 46 beziehungsweise dessen Gelenkachse 47 sich im Wesentlichen in Richtung der Pendel- oder Arbeitsbewegung des Wischhebels 10 erstreckt. Wie Figur 1 zeigt, ist die zu wischende Oberfläche 28 der Scheibe gekrümmt. Da die Linie 28 die stärkste Krümmung der Scheibenoberfläche darstellen soll, ist klar ersichtlich, dass die Krümmung des mit seinen beiden Enden 18 an der Scheibenoberfläche anliegenden, noch unbelasteten Wischblatts 16 stärker ist als die maximale Scheibenkrümmung. Unter einem über dem Wischerarm 12 ausgeübten, in Richtung des Pfeiles 22 (Figur 1) wirkenden Anpressdrucks legt sich das Wischblatt mit seiner an der unteren Bandfläche 31 des Tragelements 30 angeordneten gummieelastischen Wischleiste 24 über seine gesamte Länge an der Scheibenoberfläche 28 an. Dabei baut sich im aus Metall gefertigten, federelastischen Tragelement 30 eine Spannung auf, welche für eine ordnungsgemäße Anlage der Wischleiste 24 über deren gesamte Länge an der Scheibe sowie für eine gleichmäßige Verteilung des Anpressdrucks 22 sorgt. Weiter sorgt das Tragelement 30 mit seinen Federschienen 42 für die notwendige Querstabilisierung der gummieelastischen Wischleiste 24. Weil die in aller Regel sphärisch gekrümmte Scheibe nicht einen Abschnitt einer Kugeloberfläche darstellt, muß sich das Wischblatt 16 gegenüber dem Wischerarm 12 während seiner Wischbewegung ständig der jeweiligen Lage und dem Verlauf der Scheibenoberfläche 28 anpassen können. Deshalb ist die eine Schwingbewegung um die Gelenkzapfenachse 47 ermöglichende leichtgängige Gelenkverbindung zwischen dem Wischerarm 12 und dem Wischblatt 16 notwendig. Weiter ist aus Figur 1 in Verbindung mit Figur 5 zu entnehmen, dass die Gelenkachse 47 auch quer zur Richtung der Anlegekraft (Pfeil 22) ausgerichtet ist. Aus den Figuren 1, 2 und 7 ist zu entnehmen, dass das Wischblatt an der oberen Bandfläche 29 des Tragelements 30 mit einer beispielsweise mit der Wischleiste 24 verbundene Windabweisleiste 50 versehen ist, welche zwei Teilabschnitte 52 umfasst, die in Längsrichtung des Wischblatts gesehen mit einem Abstand 54 voneinander liegen (Figur 7). Es ergibt sich somit eine Aussparung 56 in der Windabweisleiste 50, welche die Anordnung des Kupplungsteils 32 am Tragelement 30 ermöglicht. Die Windabweisleiste 50 ist an ihrer einen, vom Fahrtwind hauptsächlich angeströmten Längsseite mit einer Anströmkehlung 58 versehen (Figur 2). Um die Gelenkverbindung zwischen dem Wischerarm 10 und dem Wischblatt 12 beziehungsweise zwischen dessen Kupplungsteil 32 abzudecken und einen harmonischen Übergang zwischen den einander zugewandten Enden der Teilabschnitte 52 der Windabweisleiste 50 zu erreichen, gehört zum Wischhebel 10 noch eine Abdeckkappe 60, deren Aufbau insbesondere anhand der Figuren 3 und 4 erläutert werden soll. Sie hat einen trogförmigen Mittelabschnitt 62, dessen Trogboden weitgehend entfernt ist, so dass sich eine Durchtrittsöffnung 64 ergibt. Wie insbesondere Figur 3 zu entnehmen ist, schließen sich über die beiden Quer-Endwände 66 und 68 hinausragende Verlängerungen 70 an, deren Ausformungen an die Querschnittsform der Windabweisleiste 50 angepasst ist und die somit ebenfalls eine Anströmkehlung 59 aufweisen. Die beiden Längswände 72 der aus einem elastischen Kunststoff hergestellten Abdeckkappe 60 sind mit elastisch auslenkbaren Rastmitteln versehen, welche beim Ausführungsbeispiel als Rastnasen 74 ausgebildet sind. Dabei sind an jeder Längswand 72 mit Abstand voneinander jeweils zwei Rastnasen 74 angeordnet und die Rastnasen der beiden Längswände 72 liegen einander paarweise gegenüber (Figuren 3 und 5). Weiter sind an jeder Längswand insbesondere zwischen den Rastnasen 74 Stütz- oder Versteifungswände 76 angeordnet, die sich im Wesentlichen von der Durchtrittsöffnung 74 bis nahe dem Trogrand 87 der Abdeckkappe 60 erstrecken. Die eine Querwand 68 der Abdeckkappe 60 ist mit einer Auskehlung 80 versehen, die sich von der Durchtrittsöffnung 64 aus über einen kleinen Teilabschnitt zum Trogrand 78 hin erstreckt und am Ende der Verlängerung 68 mündet. An den dem Trogrand 78 zugewandten Enden der Stützrippen 76 sind diese passend auf die Breite des Tragelements 30 ausgespart, so dass sich Abstützungen 82 ergeben. An der einen Längswand 72 der Abdeckkappe 60 ist in Fortführung der Anströmkehlung 58 der Windabweisleiste 50 beziehungsweise in Fortführung der Anströmkehlung 59 an den Verlängerungen 70 ebenfalls eine Hohlkehle 94 ausgebildet.

Die Montage der Abdeckkappe am Wischblatt wird anhand der Figuren 5 und 7 im folgenden erläutert.

Wie aus der Vormontageposition in Figur 7 ersichtlich ist, ist die Gesamtlänge 84 der Abdeckkappe mit ihren Verlängerungen 70 größer als der Abstand 54 zwischen den beiden Teilabschnitten 52 der Windabweisleiste 50. Dies wird durch die beiden Verlängerungen 70 bewirkt. Aus der Vormontageposition (Figur 7) heraus wird die Kappe 60 in Richtung des Pfeiles 86 auf das Wischblatt 16 aufgesetzt. Während der Aufsetzbewegung lenken die Rastnase 74 aufgrund ihrer Formgebung, beispielsweise der Anformung von Anlaufschrägen 88 in Richtung der Pfeile 90 in Figur 5 aus, wenn die Anlaufschrägen 88 gegen die Längsstreifen 40 des Tragelements 30 stoßen. Die Auslenkung kann entweder durch bestimmte, dem Fachmann bekannte Querschnittsveränderungen der Rastnasen und/oder durch eine elastische Auslenkung der Längswände 72 der Abdeckkappe 60 erreicht werden. Die Montagebewegung (Pfeil 86) der Abdeckkappe ist beendet, wenn die Abstützungen 82 an den Stützrippen 76 an der oberen Bandfläche 29 des Tragelements 30 aufsitzen. In dieser Position können die Rastnasen 74 wieder in ihre Ausgangsposition zurückfedern, weil die äusseren Längsstreifen 40 des Tragelements 30 in Hinterschnitte 92 der Rastnasen 74 gelangen können, wobei die Rastnasen das Tragelement 30 untergreifen und somit einen sicheren Sitz der Abdeckkappe 60 am Wischblatt 16 bewirken. In der nun erreichten Betriebsposition der Abdeckkappe 60 überdecken die Verlängerungen 70 der Abdeckkappe jeweils die einander zugewandten Endabschnitte der Teilabschnitte 52 der Windabweisleiste 50. Da die Formgebung der Verlängerungen im Wesentlichen eine Fortführung der Kontur der Windabweisleiste 50 darstellt, ist ein harmonischer Übergang zwischen der Windabweisleiste und der Abdeckkappe sichergestellt. Darüberhinaus kann auch der Mittelabschnitt 62 entsprechend den sich jeweils ergebenden räumlichen Möglichkeiten ebenfalls mit einer zumindest geringfügigen Hohlkehle 94 versehen werden, damit sich eine strömungsgünstige Oberfläche der Abdeckkappe ergibt, welche zu einem geräuscharmen Betrieb des Wischhebels 10 beitragen kann.

Nachdem die Abdeckkappe mit dem Wischblatt verbunden ist, kann die weitere Montage des Wischhebels erfolgen, indem das freie Ende 14 des Wischerarms 12 durch die Durchtrittsöffnung 64 hindurchgeführt und die Gelenkverbindung hergestellt wird. Je nach Ausführung der Gelenkverbindung kann es aber auch nötig sein, den Wischerarm zuerst durch die Durchtrittsöffnung 64 der noch losen Abdeckkappe zu stecken, die Gelenkverbindung herzustellen und erst dann die Abdeckkappe in der beschriebenen Weise auf das Wischblatt aufzurasten.

Eine alternative Befestigungsmöglichkeit einer Abdeckkappe 100 am Wischhebel 10 ist in Figur 6 dargestellt. Im Gegensatz zu der eben beschriebenen Ausführungsform, bei welcher die Rastnasen 74 am Tragelement 30 angreifen und somit neben den Krallen 38 des Kupplungsteils 32 plaziert sein müssen, umgreifen die Sicherungs- oder Haltekrallen 102 der Abdeckkappe 100, die Krallen 38 des Kupplungsteils 32. Sie sind also so plaziert und ausgeformt, dass sie entsprechend der Anordnung nach Figur 6 am Wischblatt angreifen. Die Montage der Abdeckkappe 100 entspricht in ihrem Ablauf der Montage bei der Abdeckkappe 60 gemäß Figur 5. Ein Vorteil der Ausführungsform gemäß Figur 6 kann darin bestehen, dass am Tragelement 30 lediglich die Krallen 38 des Kupplungsteils 32 angreifen, so dass keine zusätzliche Versteifung des Mittelabschnitts des Tragelements 30 erreicht wird. In allen weiteren Merkmalen entspricht die Abdeckkappe 100 gemäß Figur 6 der Abdeckkappe 60 gemäß den Figuren 3 bis 5. Auch der Aufbau des Wischhebels entspricht der obigen Beschreibung.

Aus der vorhergehenden Beschreibung wird deutlich, dass die Abdeckkappe 60 mit elastisch auslegbaren Rastmitteln 74 beziehungsweise 102 versehen ist, denen Gegenrastmittel 40 beziehungsweise 38 des Wischblatts 16 zugeordnet sind.

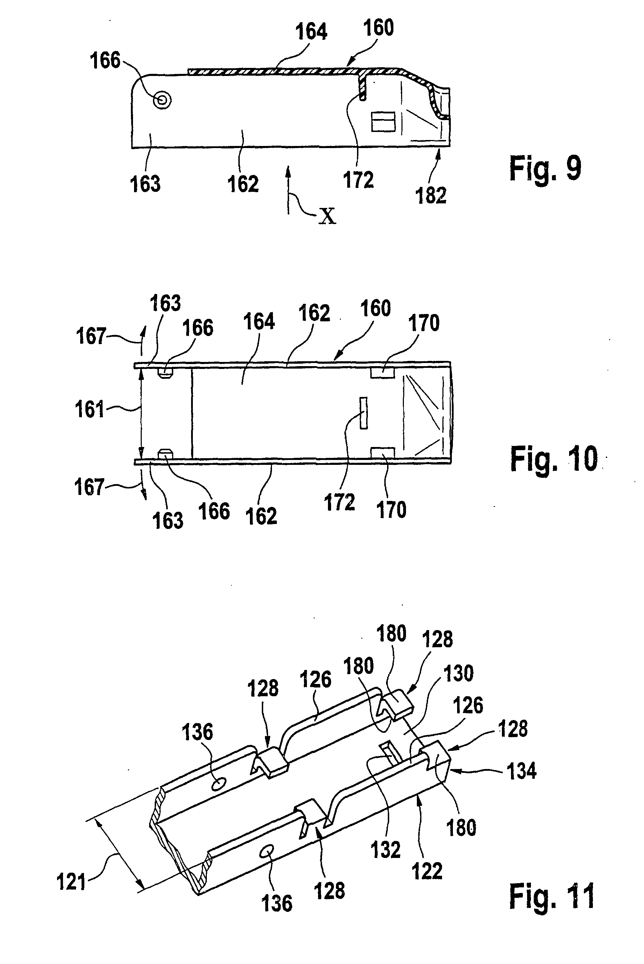

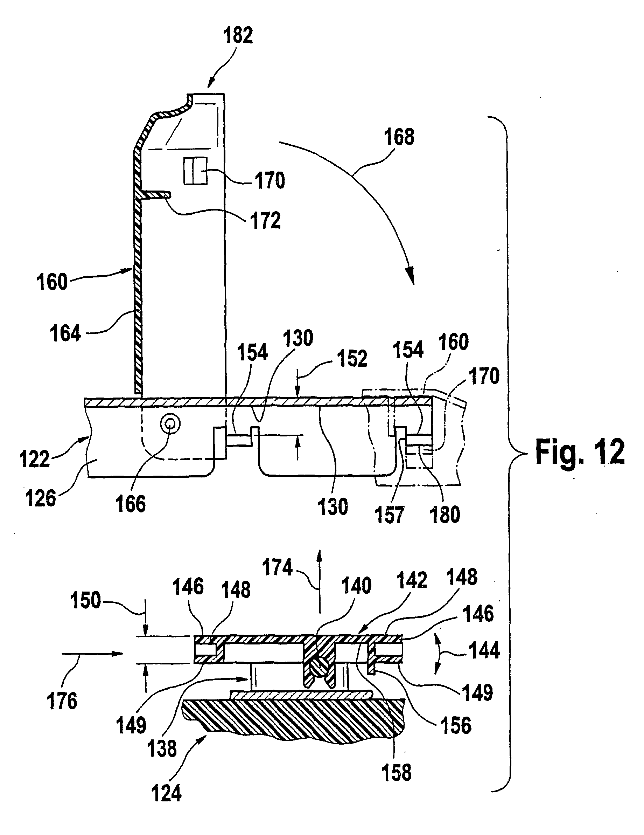

Eine zweite Ausführungsform des erfindungsgemäßen Wischhebels wird im folgenden anhand der Figuren 8 bis 12 erläutert. Zu einem Wischhebel 120 gehören ein Wischerarm 122 und ein Wischblatt 124. Im Bereich der Gelenkverbindung zwischen Wischerarm und Wischblatt hat der Wischerarm einen U-förmigen Querschnitt (Figur 11), an dessen Längswände bildenden U-Schenkeln 126 Zungen 128 freigeschnitten und in den zwischen den U-Schenkeln vorhandenen Raum abgewinkelt sind. Die Anordnung der abgewinkelten Zungen 128 ist dabei so getroffen, dass sie einander gegenüber liegen und einander entgegengerichtet sind. Weiter ist aus Figur 11 zu entnehmen, dass nahe dem freien Ende 134 des Wischerarms 122 an dessen U-Basisfläche 130 ein Durchbruch 132 angeordnet ist. Schließlich ist aus Figur 11 noch entnehmbar, dass ausgehend vom Wischerarmende 134 jenseits der abgewinkelten Zungenpaare 128 in den U-Schenkeln 126 jeweils eine Bohrung 136 angebracht ist, deren Bohrungsachsen miteinander fluchten. Von dem zum Wischhebel 120 gehörenden Wischblatt 124 ist in Figur 12 lediglich ein kleiner Teilbereich dargestellt, der die wischblattseitigen Bauteile zum Anschliessen des Wischblatts am Wischerarm 122 zeigt. An der dem Wischerarm 122 zugewandten Oberseite des Wischblatts 124 ist ein Halter 138 für einen quer zur Wischblatt-Längserstreckung ausgerichteten Gelenkbolzen 140 angeordnet. Auf den Gelenkbolzen ist in an sich bekannter Weise ein Adapter 142 aufgerastet. Es ergibt sich somit eine gelenkige Lagerung des Adapters 142 gegenüber dem Wischblatt, wobei die Längsachse des Gelenkbolzens 140 die Gelenkachse darstellt. Das Wischblatt 124 kann somit innerhalb eines bestimmten Winkels frei um die Gelenkachse des Gelenkbolzens 140 schwingen (Doppelpfeil 144 in Figur 12). Der aus einem elastischen Kunststoff hergestellte Adapter 142 ist an seinen beiden Längs-Enden 146 mit Passflächen 148, 149 versehen, die mit einem Abstand 150 voneinander liegen, welcher dem Abstand 152 entspricht, der sich zwischen der Innenwand der U-Basisfläche 130 und den dieser Innenfläche zugewandten Fläche 154 der abgewinkelten Zungen 128 ergibt (Figur 12). Der Abstand 150 der Passflächen 148, 149 voneinander entspricht somit der Dicke des Adapters 142 im Bereich dieser Passflächen. Aus Figur 12 ist weiter zu entnehmen, dass aus der Passfläche 149 des Adapters 142 eine zum Wischblatt 124 gerichtete Anschlagschulter 156 heraustritt und dass in dem Adapter 142 ein Aufnahmedurchbruch 158 angeordnet ist.

Zum Wischhebel 120 gehört darüberhinaus noch eine Abdeckkappe 160. Aus den Figuren 9 und 10 ist zu entnehmen, dass diese Abdeckkappe einen im Wesentlichen U-förmigen Querschnitt hat. Der Abstand 161 zwischen den beiden U-Schenkeln 162 ist auf die Breite 121 des Wischerarms 122 abgestimmt. Weiter zeigen die Figuren 9 und 10, dass sich die U-Schenkel 162 mit Verlängerungen 163 über die U-Basis 164 hinaus erstrecken. Da die Abdeckkappe 160 aus einem elastischen Kunststoff hergestellt ist, sind die Verlängerungen 163 quer zur Längserstreckung der U-Schenkel 162 elastisch auslenkbar. An den einander zugewandten Innenseiten der Verlängerungen 163 befinden sich aufeinander zu gerichtete Gelenkzapfen 166, deren Zapfenachsen miteinander fluchten. Die Durchmesser der Gelenkzapfen 166 sind so auf die Durchmesser der beiden Bohrungen 136 in den U-Schenkeln 126 des Wischerarms 122 so abgestimmt, dass die Abdeckkappe 160 unter Auslenkung der Verlängerungen 163 in Richtung de Pfeile 167 (Figur 10) auf den Wischerarm aufgerastet werden kann, wobei die Gelenkzapfen 166 in die als Lageraufnahmen dienenden Bohrungen 136 in den Wischerarm-U-Schenkeln 126 gelangen. Die Anordnung und Abstimmung zwischen Wischerarm 122 und Abdeckkappe 160 ist dabei so getroffen, dass eine Schwenkbewegung (Pfeil 168, Figur 12) zwischen Wischerarm und Abdeckkappe möglich ist, weil die Abstände 121 und 161 entsprechend aufeinander abgestimmt sind. Mit Abstand von den Gelenkzapfen 166 ist nahe dem anderen Ende der Abdeckkappe 160 an den Innenseiten der U-Schenkel 162 an jedem U-Schenkel als Rastmittel eine Rastnase 170 angeordnet, wobei die beiden Rastnasen einander gegenüber liegen und sich aufeinander zu erstrecken. In diesem Bereich der Abdeckkappe 160 ist an deren U-Basis 164 eine Sicherungsnase 172 angeordnet, die sich von der Innenseite der U-Basis 164 aus zwischen den beiden U-Schenkeln 162 erstreckt. Das Wischblatt 124 entspricht in seinem weiteren Aufbau dem schon beschriebenen Wischblatt 16.

Wie schon erwähnt, wird die Abdeckkappe 160 in der beschriebenen Weise gelenkig mit dem Wischerarm 122 verbunden. Sie ist somit am Wischerarm schwenkbar gelagert und ist Teil des Wischerarms. Die Schwenklagerung zwischen Wischerarm und Abdeckkappe wird dadurch erreicht, dass am Wischerarm an den einander gegenüberliegende Längswände bildenden U-Schenkeln 126, miteinander fluchtende Bohrungen oder Lageraufnahmen 136 angeordnet sind, denen an den diesen Längswänden benachbarten Kappenwänden - gebildet durch die U-Schenkel 162 - angeordnete Gelenk- oder Lagerzapfen 166 zugeordnet sind. Um das Wischblatt 124 mit dem Wischerarm 122 zu verbinden, müssen die beiden Wischhebelteile 122, 124 in eine in Figur 12 dargestellte Vormontageposition gebracht werden. Danach wird das Wischblatt in Richtung des Montagepfeils 174 zum Wischerarm bewegt, bis der Adapter 142 an der Innenwand der U-Basisfläche 130 des Wischerarms anliegt. Nun wird das Wischblatt in Richtung des Pfeiles 176 zum freien Ende 134 des Wischerarms hin verschoben, wobei die Passflächen 148, 149 des Adapters zwischen die abgewinkelten Zungen 128 des Wischerarms beziehungsweise deren Flächen 154 und dessen U-Basisfläche 130 gelangen. Die Verschiebebewegung (Pfeil 176) wird dadurch begrenzt, dass die Anschlagschulter 156 des Adapters an der ihm zugewandten, als Gegenanschlagschulter 157 dienenden Seite der am Wischerarmende 134 befindlichen abgewinkelten Zungen 128 anschlägt. In dieser Position hat das Wischblatt 124 gegenüber dem Wischerarm 122 nun seine Betriebsstellung erreicht. Um diese während des Wischbetriebs zu sichern, wird nun die Abdeckkappe 160 in Richtung des Pfeiles 168 geschwenkt, wobei die Sicherungsnase 172 durch den Durchbruch 132 hindurchgeführt wird und in den Aufnahmedurchbruch 158 des Adapters 142 gelangt. Die Abstimmung zwischen Sicherungsnase 172 und den beiden Durchbrüchen 132 und 158 ist dabei so getroffen, dass die Schwenkbewegung der Abdeckkappe 160 nicht durch den Durchbruch 132 behindert wird, dass aber die Sicherungsnase 172 passend in den eine Sicherungsausnehmung bildenden Aufnahmedurchbruch 158 des Adapters 142 eintaucht. Dadurch ist eine Relativbewegung zwischen Wischerarm und Wischblatt nicht mehr möglich. Damit die Abdeckkappe 160 während des Wischbetriebs nicht entgegen dem Schwenkpfel 168 unabsichtlich bewegt und die Sicherung zwischen Wischerarm und Wischblatt aufgehoben werden kann, untergreifen in der in Figur 8 dargestellten Betriebsposition die Rastnasen 170 der Abdeckkappe 160 die ihnen zugeordneten als Gegenrastmittel wirkenden Gegenflächen 180 des Wischerarms 122, welche an den abgewinkelten Zungen 128 ausgebildet sind. Wie aus Figur 8 ersichtlich ist, überdeckt die Abdeckkappe 160 auch die ihr benachbarten Endbereiche der Windabweisleisten-Abschnitte 52. Insbesondere das von den Gelenkzapfen 166 abgewandte, freie Ende 182 der Abdeckkappe 160 (Figur 12) ist an das Querschnittsprofil der Windabweisleiste 50 so angepasst, dass sich ein harmonischer Übergang zwischen Windabweisleiste und Abdeckkappe ergibt.

Aus der vorstehenden Beschreibung ist also klar ersichtlich, dass bei beiden Ausführungen der Wischhebel mit einer Abdeckkappe 60 beziehungsweise 160 zum Abdecken des Anschlußbereichs zwischen Wischblatt und Wischerarm versehen ist. Die sich daraus ergebenden Vorteile sind in erster Linie darin zu sehen, dass die Abdeckkappe einen harmonischen Übergang zwischen den beiden Windabweisleisten-Abschnitte 52 sicherstellt, wobei sie gleichzeitig die Gelenkmechanik verdeckt und das Gelenk gegen Umwelteinflüsse schützt.

## Patentansprüche

1. Wischhebel (10) mit einem angetriebenen Wischerarm(12) und einem an diesem angelenkten Wischblatt (16) zum Reinigen von Scheiben, insbesondere von Kraftfahrzeugen, das mit einem bandartig lauggestreckten, federelastischen Tragelement (30) versehen ist, welches an seiner der Scheibe (28) zugewandten unteren Bandfläche (31) eine an diese anlegbare langgestreckte, gummieelastische Wischleiste (24) aufweist, an dessen oberen Bandfläche (29) insbesondere im Längsmittelbereich des Tragelements ein Kupplungsteil (32) zum Anschließen des Wischblatts (16) an den Wischerarm (12) sitzt und insbesondere beidseitig des Kupplungsteils sich zu den Enden des Tragelements erstreckende Windabweisleisten-Teilabschnitte (52) angeordnet sind, **dadurch gekennzeichnet, dass** der Wischhebel (10) mit einer Kappe (60, 160) zum Abdecken des Anschlussbereiches zwischen Wischblatt (16) und Wischerarm (12) versehen ist, dass die Kappe Kappenabschnitte aufweist und dass zumindest die Kappenabschnitte, welche die ihnen benachbarten Bereiche der Windabweisleisten-Teilabschnitte (52) auch überdecken können, an die Formgebung der Windabweisleiste angepasst sind.

2. Wischhebel nach Anspruch 1, **dadurch gekennzeichnet, dass** die Abdeckkappe (60) am Wischblatt (16) gehalten ist.

3. Wischhebel nach Anspruch 2, **dadurch gekennzeichnet, dass** die Kappe (60) mit dem Wischblatt (16) verrastbar ist.

4. Wischhebel nach Anspruch 3, **dadurch gekennzeichnet, dass** die im Querschnitt etwa U-förmige Abdeckkappe (60) aus einem elastischen Kunststoff gefertigt und mit elastisch auslenkbaren Rastmitteln (74) versehen ist, denen Gegenrastmittel (40) des Wischblatts zugeordnet sind.

5. Wischhebel nach Anspruch 4, **dadurch gekennzeichnet, dass** die Gegenrastmittel des Wischblatts (16) an den äusseren Längskanten (40) des bandartigen Tragelements (30) ausgebildet sind.

6. Wischhebel nach einem der Ansprüche 4 oder 5, **dadurch gekennzeichnet, dass** die Abdeckkappe (60) mit zumindest einer mit der oberen Bandfläche (29) des Tragelements zusammenwirkenden Abstützung (82) versehen ist und dass an die Abdeckkappe (60) elastisch auslenkbare, das Tragelement (30) untergreifende, als Rastmittel dienende Rastnasen (74) angeformt sind.

7. Wischblatt nach Anspruch 4, **dadurch gekennzeichnet, dass** die Gegenrastmittel des Wischblatts (16) an Haltekrallen (38) des Kupplungsteils (32) ausgebildet sind, mit denen das Kupplungsteil am Tragelement (30) festgelegt ist.

8. Wischhebel nach Anspruch 7, **dadurch gekennzeichnet, dass** im Bereich der Haltekrallen (38) des Kupplungsteils (32) die Abdeckkappe (100) an ihrer elastisch auslenkbaren Innenwand mit die Haltekrallen (38) übergreifenden, klammerartigen Sicherungskrallen (102) versehen ist.

9. Wischhebel nach einem der Ansprüche 1 bis 8, **dadurch gekennzeichnet, dass** die Abdeckkappe (60) mit einer Durchtrittsöffnung (64) für den Wischerarm (12) versehen ist.

10. Wischhebel nach einem der Ansprüche 1 bis 9, **dadurch gekennzeichnet, dass** die Abdeckkappe (60) an ihren Längsenden mit Verlängerungen (70) die ihr zugewandten Endbereiche der Windabweisleisten-Teilabschnitte (52) überdeckt.

11. Wischhebel nach einem der Ansprüche 1 bis 10, **dadurch gekennzeichnet, dass** die Abdeckkappe (60) an ihrer einen Längswand (72) in Fortführung der Anströmkehlung (58) der Windabweisleiste (50) mit einer Hohlkehle (94) versehen ist.

12. Wischhebel nach Anspruch 1, **dadurch gekennzeichnet, dass** die Abdeckkappe (160) am Wischerarm (122) gehalten ist.

13. Wischhebel nach Anspruch 12, **dadurch gekennzeichnet, dass** die Abdeckkappe (160) am Wischerarm (122) schwenkbar gelagert ist.

14. Wischhebel nach Anspruch 13, **dadurch gekennzeichnet, dass** der Wischerarm (122) an einander gegenüberliegenden Längswänden (126) mit miteinander fluchtenden Lageraufnahmen (136) versehen ist, denen an den den Längswänden benachbarten Kappenwänden (162, 163)angeordnete Gelenkzapfen (166) zugeordnet sind.

15. Wischhebel nach Anspruch 14, **dadurch gekennzeichnet, dass** die Abdeckkappe (160) aus einem elastischen Kunststoff hergestellt ist und dass die Gelenkzapfen (166) an elastisch auslegbaren Wandbereichen (163) der Abdeckkappe angeordnet sind.

16. Wischhebel nach Anspruch 14, **dadurch gekennzeichnet, dass** an die elastisch auslenkbaren Wandbereiche (163) der Abdeckkappe (160) Rastmittel (170) angeformt sind, die in Betriebsstellung der Abdeckkappe mit am Wischerarm (122) vorhandenen Gegenrastmittel (180) zusammenwirken.

17. Wischhebel nach einem der Ansprüche 12 bis 16, bei dem die Verbindung zwischen Wischerarm (122) und Wischblatt (124) durch eine Schiebebewegung (Pfeil 176) erfolgt, wobei eine Anschlagschulter (156) des Wischerarms mit einer Gegenschulter (157) des Wischblatts zusammenwirkend die Betriebsposition fixiert, **dadurch gekennzeichnet, dass** an der Abdeckkappe (160) eine dem Wischblatt (124) zugeordnete Sicherungsnase (172) angeordnet ist, welche in dieser Betriebsposition und in Betriebsstellung der Abdeckkappe passend in eine am Wischblatt vorhandene Sicherungsausnehmung (158) greift.

18. Wischerarm nach einem der Ansprüche 1 bis 17 mit einer an diesem angelenkten Abdeckkappe.

19. Wischblatt nach einem der Ansprüche 1 bis 17 mit einer an diesem befestigten Abdeckkappe.

## Claims

1. Windscreen wiper (10) with a driven wiper arm (12) and wiper blade (16) jointed thereto for cleaning screens, in particular on motor vehicles, which windscreen wiper is provided with a spring-elastic supporting element (30) which is elongated in the manner of a band and has, on its lower band surface (31) facing the screen (28), an elongated, rubber-elastic wiper strip (24), which can be placed against the said screen and on the upper band surface (29) of which, in particular in the longitudinal central region of the supporting element, sits a coupling part (32) for joining the wiper blade (16) to the wiper arm (12), and wind-deflecting-strip subsections (52) which extend to the ends of the supporting elements are arranged, in particular, on both sides of the coupling part, **characterized in that** the windscreen wiper (10) is provided with a cap (60, 160) for covering the joining region between the wiper blade (16) and wiper arm (12), **in that** the cap has cap sections, and **in that** at least those cap sections which can also overlap those regions of the wind-deflecting-strip subsections (52) that are adjacent to them are matched to the shaping of the wind-deflecting strip.

2. Windscreen wiper according to Claim 1, **characterized in that** the covering cap (60) is held on the wiper blade (16).

3. Windscreen wiper according to Claim 2, **characterized in that** the cap (60) can be latched to the wiper blade (16).

4. Windscreen wiper according to Claim 3, **characterized in that** the cross-sectionally approximately U-shaped covering cap (60) is manufactured from a flexible plastic and is provided with elastically deflectable latching means (74) which are assigned mating latching means (40) of the wiper blade.

5. Windscreen wiper according to Claim 4, **characterized in that** the mating latching means of the wiper blade (16) are formed on the outer longitudinal edges (40) of the band-like supporting element (30).

6. Windscreen wiper according to either of Claims 4 and 5, **characterized in that** the covering cap (60) is provided with at least one support (82) which interacts with the upper band surface (29) of the supporting element, and **in that** elastically deflectable latching lugs (74), which engage under the supporting element (30) and serve as latching means, are integrally formed on the covering cap (60).

7. Wiper blade according to Claim 4, **characterized in that** the mating latching means of the wiper blade (16) are formed on retaining claws (38) of the coupling part (32) with which the coupling part is fixed on the supporting element (30).

8. Windscreen wiper according to Claim 7, **characterized in that**, in the region of the retaining claws (38) of the coupling part (32), the covering cap (100) is provided, on its elastically deflectable inner wall, with clip-like securing claws (102) engaging over the retaining claws (38).

9. Windscreen wiper according to one of Claims 1 to 8, **characterized in that** the covering cap (60) is provided with a passage opening (64) for the wiper arm (12).

10. Windscreen wiper according to one of Claims 1 to 9, **characterized in that** the covering cap (60), at its longitudinal ends, uses extensions (70) to overlap the end regions, which face it, of the wind deflecting-strip subsections (52).

11. Windscreen wiper according to one of Claims 1 to 10, **characterized in that** the covering cap (60) is provided on its one longitudinal wall (72) with a channel (94) as a continuation of the approach-flow channelling (58) of the wind-deflecting strip (50).

12. Windscreen wiper according to Claim 1, **characterized in that** the covering cap (160) is held on the wiper arm (122).

13. Windscreen wiper according to Claim 12, **characterized in that** the covering cap (160) is mounted pivotably on the wiper arm (122).

14. Windscreen wiper according to Claim 13, **characterized in that** the wiper arm (122) is provided, on mutually opposite longitudinal walls (126), with mutually aligned bearing receptacles (136) which are assigned pivots (166) arranged on the cap walls (162, 163) adjacent to the longitudinal walls.

15. Windscreen wiper according to Claim 14, **characterized in that** the covering cap (160) is produced from a flexible plastic, and **in that** the pivots (166) are arranged on elastically deflectable wall regions (163) of the covering cap.

16. Windscreen wiper according to Claim 14, **characterized in that** latching means (170) are integrally formed on the elastically deflectable wall regions (163) of the covering cap (160) and, in the operational position of the covering cap, interact with mating latching means (180) present on the wiper arm (122).

17. Windscreen wiper according to one of Claims 12 to 16, in which the connection between the wiper arm (122) and wiper blade (124) takes place by means of a push-in movement (arrow 176), a stop shoulder (156) of the wiper arm, interacting with a mating shoulder (157) of the wiper blade, fixing the operational position, **characterized in that** a securing lug (172) which is assigned to the wiper blade (124) is arranged on the covering cap (160) and, in this operational position and in the operational position of the covering cap, reaches in a fitting manner into a securing recess (158) present on the wiper blade.

18. Wiper arm according to one of Claims 1 to 17 with a covering cap jointed thereto.

19. Wiper blade according to one of Claims 1 to 17 with a covering cap fastened thereto.

## Revendications

1. Essuie-glace (10) comportant un bras d'essuie-glace (12) entraîné et un balai d'essuie-glace (16) articulé sur le bras pour le nettoyage de vitres, en particulier de véhicules automobiles, muni d'un élément support (30) en forme de bande, allongé, flexible, dont la surface de bande inférieure (31) tournée vers la vitre (28), porte une lame (24) allongée, souple, pouvant s'appuyer sur celle-ci, et dont la surface de bande supérieure (29) porte notamment dans la zone médiane longitudinale de l'élément support, un élément de couplage (32) pour raccorder le balai d'essuie-glace (16) au bras d'essuie-glace (12) alors qu'en particulier des segments partiels de déflecteur (52) s'étendant vers les extrémités de l'élément support sont montés des deux côtés de l'élément de couplage,
**caractérisé en ce que**
l'essuie-glace (10) est muni d'un capuchon (60, 160) pour recouvrir la zone de raccordement entre le balai d'essuie-glace (16) et le bras d'essuie-glace (12), le capuchon présente des segments de capuchon, dont au moins les segments de capuchon qui peuvent également recouvrir les segments partiels de déflecteur (52) qui lui sont adjacents, sont adaptés à la forme du déflecteur.

2. Essuie-glace selon la revendication 1,
**caractérisé en ce que**
le capuchon (60) est maintenu sur le balai d'essuie-glace (16).

3. Essuie-glace selon la revendication 2,
**caractérisé en ce que**
le capuchon (60) s'accroche au balai d'essuie-glace (16).

4. Essuie-glace selon la revendication 3,
**caractérisé en ce que**
le capuchon (60) de section transversale approximativement en forme de U est en matière plastique élastique, et muni d'éléments d'accrochage (74) pouvant être déviés élastiquement auxquels sont associés des éléments de contre-accrochage (40) du balai d'essuie-glace.

5. Essuie-glace selon la revendication 4,
**caractérisé en ce que**
les éléments de contre-accrochage du balai d'essuie-glace (16) sont formés sur les arêtes longitudinales extérieures (40) de l'élément support (30) en forme de bande.

6. Essuie-glace selon l'une quelconque des revendications 4 ou 5,
**caractérisé en ce que**
le capuchon (60) est muni d'au moins un appui (82) coopérant avec la surface de bande supérieure (29) de l'élément support, et le capuchon (60) comporte des becs d'accrochages (74) pouvant être déviés élastiquement, qui s'engagent sous l'élément support (30) et servent d'éléments d'accrochage.

7. Essuie-glace selon la revendication 4,
**caractérisé en ce que**
les éléments de contre-accrochage du balai d'essuie-glace (16) sont formés sur les griffes de retenue (38) de l'élément de couplage (32), qui fixent l'élément de couplage sur l'élément support (30).

8. Essuie-glace selon la revendication 7,
**caractérisé en ce que**
sur sa paroi intérieure pouvant être déviée élastiquement, dans la zone des griffes de retenue (38) de l'élément de couplage (32), le capuchon (100) comporte des griffes de blocage (102) en forme de pinces qui recouvrent les griffes de retenue (38).

9. Essuie-glace selon l'une quelconque des revendications 1 à 8,
**caractérisé en ce que**
le capuchon (60) est muni d'une ouverture de passage (64) pour le bras d'essuie-glace (12).

10. Essuie-glace selon l'une quelconque des revendications 1 à 9,
**caractérisé en ce que**
des prolongements (70) du capuchon (60) recouvrent, sur ses extrémités longitudinales, les zones terminales des segments partiels de déflecteur (52) tournés vers le capuchon.

11. Essuie-glace selon l'une quelconque des revendications 1 à 10,
**caractérisé en ce que**
le capuchon (60) est muni d'une cannelure (94) sur l'une de ses parois longitudinales (72) dans le prolongement de la moulure d'intrados (58) du déflecteur (50).

12. Essuie-glace selon la revendication 1,
**caractérisé en ce que**
le capuchon (160) est maintenu sur le bras d'essuie-glace (122).

13. Essuie-glace selon la revendication 12,
**caractérisé en ce que**
le capuchon (160) est monté pivotant sur le bras d'essuie-glace (122).

14. Essuie-glace selon la revendication 13,
**caractérisé en ce que**
le bras d'essuie-glace (122) comporte sur des parois longitudinales (126) opposées, des logements de paliers (136) alignés l'un sur l'autre, auxquels sont associés des pivots (166) disposés sur les parois de capuchon (162, 163) adjacentes aux parois longitudinales.

15. Essuie-glace selon la revendication 14,
**caractérisé en ce que**
le capuchon (160) en matière plastique élastique et les pivots (166) sont disposés sur des zones de paroi (163) élastiquement extensibles du capuchon.

16. Essuie-glace selon la revendication 14,
**caractérisé en ce que**
des éléments d'encliquetage (170), qui coopèrent lorsque le capuchon est en position de fonctionnement, avec des éléments de contre-encliquetage (180) sur le bras d'essuie-glace (122), sont formés sur les zones de parois (163) du capuchon (160) pouvant être déviées élastiquement.

17. Essuie-glace selon l'une quelconque des revendications 12 à 16, dans lequel le raccordement entre le bras d'essuie-glace (122) et le balai d'essuie-glace (124) s'effectue par un mouvement de poussée (flèche 176), jusqu'à un épaulement de butée (156) du bras d'essuie-glace qui fixe la position de fonctionnement en coopérant avec un contre-épaulement (157) du balai d'essuie-glace,
**caractérisé en ce que**
le capuchon (160) comporte un bec de sécurité (172) adapté au balai d'essuie-glace (124) qui s'adapte par enclenchement dans cette position de fonctionnement, et passe dans un évidement de sécurité (158) du balai d'essuie-glace qui lorsque le capuchon est en position de fonctionnement.

18. Bras d'essuie-glace d'un essuie-glace selon l'une quelconque des revendications 1 à 17, avec un capuchon articulé sur le bras.

19. Balai d'essuie-glace monté sur un essuie glace selon l'une quelconque des revendications 1 à 17, avec un capuchon fixé au balai.
